# FASCICULE DE BREVET EUROPEEN

(11) **EP 4 263 455 B1**
(45) Date de publication et mention de la délivrance du brevet: **06.11.2024**
(21) Numéro de dépôt: 21851971.8
(22) Date de dépôt: 16.12.2021
(51) Int. Cl.: C03C 17/36

(54) **MATÉRIAU COMPORTANT UN EMPILEMENT À SOUS-COUCHE DIÉLÉCTRIQUE FINE D'OXIDE À BASE DE ZINC ET PROCÉDÉ DE DÉPOT DE CE MATÉRIAU**
MATERIAL MIT EINEM STAPEL MIT EINER DÜNNEN, DIELEKTRISCHEN OXIDUNTERSCHICHT AUF ZINKBASIS UND VERFAHREN ZUR ABSCHEIDUNG DIESES MATERIALS
MATERIAL COMPRISING A STACK WITH A THIN ZINC-BASED DIELECTRIC OXIDE UNDERLAYER AND METHOD FOR DEPOSITING SAID MATERIAL

(30) Priorité: 18.12.2020 FR 2013685
(43) Date de publication de la demande: 25.10.2023
(73) Titulaire: Saint-Gobain Glass France, 92400 Courbevoie (FR)
(72) Inventeur: GUIMARD, Denis, 75013 Paris (FR); BARRES, Thomas, 92600 Asnières sur Seine (FR); ORVEN, Matthieu, 92230 Gennevilliers (FR)
(74) Mandataire: Saint-Gobain Recherche
(86) Numéro de dépôt international: PCT/FR2021/052360
(87) Numéro de publication internationale: WO 2022/129797

(56) Documents cités:
- WO-A1-2012/110823
- FR-A1- 2 919 110
- FR-A1- 3 026 404
- US-A1- 2019 218 140

## Description

L'invention concerne un matériau comprenant un substrat revêtu sur une face d'un empilement de couches minces à propriétés de réflexion dans l'infrarouge et/ou dans le rayonnement solaire comportant au moins une couche fonctionnelle métallique, en particulier à base d'argent ou d'alliage métallique contenant de l'argent et au moins deux revêtements antireflet, lesdits revêtements antireflet comportant chacun au moins une couche diélectrique, ladite couche fonctionnelle étant disposée entre les deux revêtements antireflet.

Dans ce type d'empilement, l'unique, ou chaque, couche fonctionnelle métallique se trouve ainsi disposée entre deux revêtements antireflet comportant chacun en général plusieurs couches qui sont chacune en un matériau diélectrique du type nitrure, et notamment nitrure de silicium ou d'aluminium, ou oxyde. Du point de vu optique, le but de ces revêtements qui encadrent la ou chaque couche fonctionnelle métallique est « d'antirefléter » cette couche fonctionnelle métallique.

Il est connu de la demande de brevet européen N° EP 718 250 une configuration antérieure dans laquelle d'une part une couche à base d'oxyde de zinc est située juste sous et au contact de la couche fonctionnelle métallique, en direction du substrat, puis une couche à base de nitrure de silicium sous et au contact cette couche à base d'oxyde de zinc et dans laquelle d'autre part une couche à base d'oxyde de zinc est située au-dessus, à l'opposé du substrat, puis une couche diélectrique, par exemple à base de nitrure de silicium, est située sur et au contact de cette couche à base d'oxyde de zinc.

Ce document enseigne en particulier que le matériau comprenant cet empilement de couches minces et le substrat sur une face duquel il est situé peut subir un traitement thermique sollicitant, du type bombage, trempe ou recuit, qui conduit à une modification structurelle du substrat sans dégrader les propriétés optiques et thermiques de l'empilement.

Il est connu par ailleurs de la demande internationale de brevet N° WO 2010/142926 d'appliquer un traitement par rayonnement après le dépôt d'un empilement comportant une couche fonctionnelle pour diminuer l'émissivité ou améliorer les propriétés optiques de cet empilement, en prévoyant en particulier une couche absorbante en couche terminale de l'empilement. L'utilisation d'une couche terminale absorbante permet d'accroitre l'absorption du rayonnement par l'empilement et de diminuer la puissance nécessaire au traitement. Comme la couche terminale s'oxyde lors du traitement et devient transparente, les caractéristiques optiques de l'empilement après traitement sont intéressantes (une transmission lumineuse élevée peut notamment être obtenue).

A la différence du traitement thermique évoqué précédemment, ce traitement par rayonnement de l'empilement ne modifie pas structurellement le substrat.

Le document WO 2012/110823 A1 décrit des matériaux comprenant un substrat verrier revêtu sur une face d'un empilement de couches minces.

L'invention repose sur la découverte d'une configuration particulière de couches encadrant une couche fonctionnelle métallique qui permet de diminuer la résistance par carré à épaisseur de couche fonctionnelle identique, voire de diminuer l'épaisseur de couche fonctionnelle pour obtenir des propriétés thermiques améliorées, et cela après un traitement thermique du matériau ou un traitement par rayonnement de l'empilement selon les techniques connues.

Un but de l'invention est ainsi de parvenir à mettre au point un nouveau type d'empilement de couches à une ou plusieurs couches fonctionnelles, empilement qui présente, après traitement thermique du matériau ou traitement de l'empilement par un rayonnement, une faible résistance par carré (et donc une faible émissivité), une transmission lumineuse élevée, ainsi qu'une homogénéité d'aspect, tant en transmission qu'en réflexion.

Dans la configuration particulière selon l'invention, il est proposé d'une part de disposer une couche très fine d'oxyde à base de zinc juste sous et au contact, en direction du substrat, de l'unique couche fonctionnelle métallique ou au moins de la couche fonctionnelle métallique la plus proche du substrat, puis de disposer une couche de nitrure à base de silicium-zirconium sous et au contact cette couche très fine d'oxyde à base de zinc, puis une couche diélectrique primaire de nitrure à base de silicium sous et au contact de la sous-couche de nitrure à base de silicium-zirconium et d'autre part de disposer une couche fine d'oxyde à base de zinc juste au-dessus de la couche fonctionnelle métallique, à l'opposé du substrat, puis de disposer une couche diélectrique, par exemple de nitrure à base de silicium, sur et au contact ou non de cette couche fine d'oxyde à base de zinc.

L'invention a ainsi pour objet, dans son acception la plus large, un matériau selon la revendication 1. Ce matériau comprend un substrat verrier revêtu sur une face d'un empilement de couches minces à propriétés de réflexion dans l'infrarouge et/ou dans le rayonnement solaire comportant au moins une couche fonctionnelle métallique, en particulier à base d'argent ou d'alliage métallique contenant de l'argent et au moins deux revêtements antireflet, lesdits revêtements antireflet comportant chacun au moins une couche diélectrique, ladite couche fonctionnelle étant disposée entre les deux revêtements antireflet, ledit matériau étant remarquable :
- d'une part en ce que ledit revêtement antireflet sous-jacent, situé sous ladite couche fonctionnelle en direction dudit substrat, comporte :
- une sous-couche d'oxyde à base de zinc ZnO qui est située sous et au contact de ladite couche fonctionnelle, avec une épaisseur physique de ladite sous-couche d'oxyde à base de zinc ZnO qui est comprise entre 0,3 et 4,4 nm, voire entre 0,3 et 2,9 nm, voire entre 0,5 et 2,4 nm ;
- une sous-couche diélectrique d'oxyde mixte à base de zinc et d'étain SnᵢZnⱼO, avec une épaisseur physique de ladite sous-couche diélectrique d'oxyde mixte à base de zinc et d'étain SnᵢZnⱼO qui est comprise entre 3,0 et 50,0 nm, voire entre 4,0 et 40,0 nm, voire entre 5,0 et 35,0 nm ; voire même entre 5,0 et 15,0 nm ;
- une sous-couche diélectrique de nitrure à base de silicium Si₃N₄ ou à base de silicium-zirconium SiₓN_{y}Zr_{Z}, qui est située sous et au contact de ladite sous-couche diélectrique d'oxyde à base de zinc et d'étain SnᵢZnⱼO, avec une épaisseur physique de ladite sous-couche diélectrique de nitrure à base de silicium Si₃N₄ ou à base de silicium-zirconium SiₓN_{y}Zr_{Z} qui est comprise entre 5,0 et 50,0 nm, voire entre 10,0 et 40,0 nm, voire entre 15,0 et 25,0 nm ; et
- d'autre part en ce que ledit revêtement antireflet sus-jacent, situé au-dessus ladite couche fonctionnelle à l'opposé dudit substrat, comporte :
- une surcouche d'oxyde à base de zinc ZnO, avec une épaisseur physique de ladite surcouche d'oxyde à base de zinc ZnO qui est comprise entre 2,0 et 10,0 nm, voire entre 2,0 et 8,0 nm, voire entre 2,5 et 5,4 nm ; et
- une surcouche diélectrique qui est située sur ladite surcouche d'oxyde à base de zinc ZnO et, de préférence une surcouche diélectrique de nitrure à base de silicium, Si₃N₄
- et en outre en ce que une couche de surblocage d'oxyde à base de titane TiOₓ est située sur et au contact de ladite couche fonctionnelle et sous ledit revêtement antireflet sus-jacent, avec une épaisseur physique de ladite couche de blocage d'oxyde à base de titane TiOₓ qui est comprise entre 0,3 et 5,0 nm, voire entre 0,3 et 2,9 nm, voire entre 0,5 et 2,4 nm.

Ladite sous-couche d'oxyde à base de zinc est la couche très fine évoquée précédemment : elle présente une épaisseur correspondant au minium à une couche mono-moléculaire de Zn₁O₁ et une épaisseur maximum de quelques nanomètres seulement. Dans cette couche, de préférence, l'oxyde de zinc n'est ni sous-stœchiométrique, ni sur-stoechiométrique, afin de présenter un coefficient d'absorption le plus bas possible dans le domaine du visible ; cela simplifie la fabrication et la maîtrise des effets du traitement thermique du matériau ou des effets du traitement de l'empilement par un rayonnement.

Ladite sous-couche diélectrique de nitrure est une couche barrière qui empêche la pénétration d'éléments provenant du substrat en direction de la couche fonctionnelle métallique lors du traitement.

Ladite couche de surblocage d'oxyde à base de titane TiOₓ peut en particulier présenter une épaisseur physique qui est comprise entre 0,3 et 4,9 nm, voire entre 0,3 et 3,9 nm, voire entre 0,3 et 2,9 nm ; elle peut par ailleurs présenter une épaisseur physique qui est comprise entre 1,0 et 4,9 nm, voire entre 1,0 et 3,9 nm, voire entre 1,0 et 2,9 nm.

Ladite couche de surblocage d'oxyde à base de titane TiOₓ peut en particulier ne comporter que les deux éléments : titane et oxygène ; cela simplifie la fabrication et la maîtrise des effets du traitement thermique du matériau ou des effets du traitement de l'empilement par un rayonnement.

Ledit empilement peut comporter une seule couche fonctionnelle métallique ou peut comporter deux couches fonctionnelles métalliques, ou trois couches fonctionnelles métalliques, ou quatre couches fonctionnelles métalliques ; les couches fonctionnelles métalliques dont il s'agit ici sont des couches continues.

De préférence, ledit matériau ne comporte pas de couche fonctionnelle métallique discontinue ; en effet, une telle couche fonctionnelle métallique discontinue ne supporte pas un traitement thermique du matériau ou un traitement de l'empilement par un rayonnement sans modification de son état et une telle modification d'état est difficile à maîtriser pour une telle couche.

De préférence, lorsque l'empilement comporte plusieurs couches fonctionnelles métalliques, chaque couche fonctionnelle est selon l'indication précédente, avec :
- d'une part ledit revêtement antireflet sous-jacent, situé sous et au contact de chaque couche fonctionnelle qui comporte, en direction dudit substrat :
- une sous-couche d'oxyde à base de zinc ZnO qui est située sous et au contact de ladite couche fonctionnelle, avec une épaisseur physique de ladite sous-couche d'oxyde à base de zinc ZnO qui est comprise entre 0,3 et 4,4 nm, voire entre 0,3 et 2,9 nm, voire entre 0,5 et 2,4 nm, voire entre 0,3 et 2,9 nm, voire entre 0,5 et 2,4 nm ;
- une sous-couche diélectrique d'oxyde mixte à base de zinc et d'étain SnᵢZnⱼO, avec une épaisseur physique de ladite sous-couche diélectrique d'oxyde mixte à base de zinc et d'étain SnᵢZnⱼO qui est comprise entre 3,0 et 50,0 nm, voire entre 4,0 et 40,0 nm, voire entre 5,0 et 35,0 nm ; voire même entre 5,0 et 15,0 nm ;
- une sous-couche diélectrique de nitrure à base de silicium Si₃N₄ ou à base de silicium-zirconium SiₓN_{y}Zr_{Z}, qui est située sous et au contact de ladite sous-couche diélectrique d'oxyde à base de zinc et d'étain SnᵢZnⱼO, avec une épaisseur physique de ladite sous-couche de nitrure à base de silicium Si₃N₄ ou à base de silicium-zirconium SiₓN_{y}Zr_{Z} qui est comprise entre 5,0 et 50,0 nm, voire entre 10,0 et 40,0 nm, voire entre 15,0 et 25,0 nm ; et
- d'autre part ledit revêtement antireflet sus-jacent, situé au-dessus et au contact de chaque couche fonctionnelle, qui comporte à l'opposé dudit substrat :
- une surcouche d'oxyde à base de zinc ZnO, avec une épaisseur physique de ladite surcouche d'oxyde à base de zinc ZnO qui est comprise entre 2,0 et 10,0 nm, voire entre 2,0 et 8,0 nm, voire entre 2,5 et 5,4 nm ; et
- une surcouche diélectrique qui est située sur ladite surcouche d'oxyde à base de zinc ZnO et, de préférence une surcouche diélectrique de nitrure à base de silicium, Si₃N₄
- et en outre une couche de surblocage d'oxyde à base de titane TiOₓ qui est située sur et au contact de chaque couche fonctionnelle et sous chaque revêtement antireflet sus-jacent, avec une épaisseur physique de chaque couche de blocage d'oxyde à base de titane TiOₓ qui est comprise entre 0,3 et 5,0 nm, voire entre 0,3 et 2,9 nm, voire entre 0,5 et 2,4 nm.

Pour un empilement à plusieurs couches fonctionnelles métalliques, chaque revêtement antireflet situé entre deux couches fonctionnelles métalliques comporte à la fois une partie antireflet sus-jacent, par rapport à la couche fonctionnelle située en dessous et à la fois une partie antireflet sous-jacent, par rapport à la couche fonctionnelle située au-dessus.

Ladite couche fonctionnelle métallique, ou chaque fonctionnelle métallique, présente de préférence une épaisseur physique qui est comprise entre 8,0 et 22,0 nm, voire entre 9,0 et 16,4 nm, voire entre 9,5 et 12,4 nm.

Une couche fonctionnelle métallique comporte, de préférence, majoritairement, à au moins 50 % en ratio atomique, au moins un des métaux choisi dans la liste : Ag, Au, Cu, Pt ; une, plusieurs, ou chaque, couche fonctionnelle métallique est de préférence en argent.

Par « couche métallique » au sens de la présente invention, il faut comprendre que la couche est absorbante comme indiquée ci-avant et qu'elle ne comporte pas d'atome d'oxygène, ni d'atome d'azote.

Comme habituellement, par « couche diélectrique » au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5.

Il est rappelé que n désigne l'indice de réfraction réel du matériau à une longueur d'onde donnée et le coefficient k représente la partie imaginaire de l'indice de réfraction à une longueur d'onde donnée ; le rapport n/k étant calculé à une longueur d'onde donnée identique pour n et pour k.

Par « au contact » on entend au sens de l'invention qu'aucune couche n'est interposée entre les deux couches considérées.

Par « à base de » on entend au sens de l'invention que pour la composition de cette couche, les éléments réactifs oxygène, ou azote, ou les deux s'ils sont présents tous les deux, ne sont pas considérés et l'élément non réactif ou les éléments réactif (par exemple le silicium ou le zinc ou encore le silicium et le zirconium ensemble) qui est indiqué comme constituant la base, est présent à plus de 85 % atomique du total des éléments non réactifs dans la couche. Cette expression inclut ainsi ce qu'il est courant de nommer dans la technique considérée du « dopage », alors que l'élément dopant, ou chaque élément dopant, peut être présent en quantité allant jusqu'à 10 % atomique, mais sans que le total de dopant ne dépasse 15 % atomique.

De préférence, lorsque ladite sous-couche diélectrique de nitrure est à base de silicium-zirconium SiₓN_{y}Zr_{Z} elle présente un rapport atomique de silicium sur zirconium, x/z, compris entre 2,2 et 5,6, voire entre 2,9 et 5,6, voire entre 3,0 et 4,8 ; ainsi, son indice est légèrement plus élevé, de l'ordre de 0, 2 à 0,5, de celui d'une sous-couche diélectrique de nitrure à base de silicium Si₃N₄ ; de préférence en outre, lorsque ladite sous-couche diélectrique de nitrure est à base de silicium-zirconium SiₓN_{y}Zr_{Z} elle ne comporte pas d'oxygène.

Lorsque ladite sous-couche de nitrure est à base de silicium-zirconium SiₓN_{y}Zr_{Z}, il est possible qu'une sous-couche diélectrique primaire de nitrure à base de silicium Si₃N₄ soit située sous et au contact de cette sous-couche de nitrure à base de silicium-zirconium SiₓN_{y}Zr_{Z}, avec une épaisseur physique de ladite sous-couche diélectrique primaire de nitrure à base de silicium Si₃N₄ qui est comprise entre 5,0 et 30,0 nm, voire entre 5,0 et 20,0 nm, voire entre 5,0 et 10,0 nm.

Dans une variante particulière, ledit revêtement antireflet sous-jacent, situé sous ladite couche fonctionnelle, et/ou ledit revêtement antireflet sus-jacent, situé au-dessus ladite couche fonctionnelle, ne comporte aucune couche à l'état métallique. En effet, il n'est pas souhaité qu'une telle couche puisse réagir, et en particulier s'oxyder, lors du traitement.

Dans une variante particulière, ledit revêtement antireflet sous-jacent, situé sous ladite couche fonctionnelle, et/ou ledit revêtement antireflet sus-jacent, situé au-dessus ladite couche fonctionnelle, ne comporte aucune couche absorbante ; Par « couche absorbante » au sens de la présente invention, il faut comprendre que la couche est un matériau présentant un coefficient k moyen, sur toute la plage de longueur d'onde du visible (de 380 nm à 780 nm), supérieur à 0,5 et présentant une résistivité électrique à l'état massif (telle que connue dans la littérature) qui est supérieure à 10⁻⁵ Ω.cm. En effet, il n'est pas souhaité qu'une telle couche puisse réagir, et en particulier s'oxyder, lors du traitement.

Il est d'autant plus surprenant d'atteindre les propriétés visées par l'invention pour ces deux variantes précédentes car des propriétés similaires sont parfois obtenues dans l'art antérieur avec ces deux variantes précédentes.

Dans une variante, ladite sous-couche diélectrique de nitrure à base de silicium Si₃N₄ ne comporte pas de zirconium.

De préférence par ailleurs, ladite sous-couche diélectrique à base de nitrure de silicium Si₃N₄ ne comporte pas d'oxygène.

Dans une variante spécifique, ledit revêtement antireflet sous-jacent, situé sous ladite couche fonctionnelle, comporte en outre une sous-couche intermédiaire diélectrique supplémentaire, située entre ladite sous-couche diélectrique de nitrure à base de silicium Si₃N₄ et ladite face, cette sous-couche intermédiaire diélectrique supplémentaire étant oxydée (c'est-à-dire comportant de l'oxygène) et comprenant de préférence : un oxyde mixte de zinc et d'étain ou un oxyde de titane TiOₓ. Cette sous-couche intermédiaire diélectrique est de préférence située au contact de la sous-couche diélectrique de nitrure à base de silicium Si₃N₄.

Ladite sous-couche d'oxyde à base de zinc ZnO et/ou ladite surcouche d'oxyde à base de zinc ZnO est, de préférence, constituée d'oxyde de zinc ZnO dopé à l'aluminium, c'est-à-dire qu'elle ne comporte aucun autre élément que Zn, Al et O.

Dans une variante spécifique, ledit revêtement antireflet sus-jacent, situé au-dessus de ladite couche fonctionnelle, comporte en outre une surcouche intermédiaire diélectrique située entre ladite surcouche d'oxyde à base de zinc ZnO et ladite surcouche diélectrique, cette surcouche intermédiaire diélectrique étant oxydée et comprenant de préférence : un oxyde de titane TiOₓ ou un oxyde mixte de zinc et d'étain.

La présente invention se rapporte par ailleurs à un vitrage multiple comportant un matériau selon l'invention, et au moins un autre substrat, les substrats étant maintenus ensemble par une structure de châssis, ledit vitrage réalisant une séparation entre un espace extérieur et un espace intérieur, dans lequel au moins une lame de gaz intercalaire est disposée entre les deux substrats.

Chaque substrat peut être clair ou coloré. Un des substrats au moins notamment peut être en verre coloré dans la masse. Le choix du type de coloration va dépendre du niveau de transmission lumineuse et/ou de l'aspect colorimétrique recherchés pour le vitrage une fois sa fabrication achevée.

Un substrat du vitrage, notamment le substrat porteur de l'empilement peut être bombé et/ou trempé après le dépôt de l'empilement. Il est préférable dans une configuration de vitrage multiple que l'empilement soit disposé de manière à être tourné du côté de la lame de gaz intercalaire.

Le vitrage peut aussi être un triple vitrage constitué de trois feuilles de verre séparées deux par deux par une lame de gaz. Dans une structure en triple vitrage, le substrat porteur de l'empilement peut être en face 2 et/ou en face 5, lorsque l'on considère que le sens incident de la lumière solaire traverse les faces dans l'ordre croissant de leur numéro.

Ladite surcouche diélectrique qui est située sur ladite surcouche d'oxyde à base de zinc ZnO, et qui est de préférence une surcouche diélectrique de nitrure à base de silicium, Si₃N₄ peut présenter une épaisseur comprise entre 5,0 et 50,0 nm, voire entre 10,0 et 45,0 nm, voire entre 25,0 et 45,0 nm.

La présente invention se rapporte par ailleurs à un procédé d'obtention, ou de fabrication, d'un matériau comportant un substrat verrier revêtu sur une face d'un empilement de couches minces à propriétés de réflexion dans l'infrarouge et/ou dans le rayonnement solaire comportant au moins une couche fonctionnelle métallique, en particulier à base d'argent ou d'alliage métallique contenant de l'argent et deux revêtements antireflet, lesdits revêtements antireflet comportant chacun au moins une couche diélectrique, ladite couche fonctionnelle étant disposée entre les deux revêtements antireflet, ledit procédé comprenant les étapes suivantes, dans l'ordre :
- le dépôt sur une face dudit substrat d'un empilement de couches minces à propriétés de réflexion dans l'infrarouge et/ou dans le rayonnement solaire comportant au moins une couche fonctionnelle métallique, en particulier à base d'argent ou d'alliage métallique contenant de l'argent et au moins deux revêtements antireflet, afin de former un matériau selon l'invention, puis
- le traitement dudit empilement de couches minces à l'aide d'une source produisant un rayonnement et notamment un rayonnement infrarouge, afin de traiter l'empilement de couches minces en tant que tel.

Ledit traitement est, de préférence, opéré dans une atmosphère ne comprenant pas d'oxygène.

Ladite sous-couche d'oxyde à base de zinc ZnO est, de préférence, déposée à partir d'une cible céramique comprenant du ZnO et dans une atmosphère ne comportant pas d'oxygène ou comportant au plus 10,0 % d'oxygène.

Les détails et caractéristiques avantageuses de l'invention ressortent des exemples non limitatifs suivants, illustrés à l'aide des figures ci-jointes :
- [fig. 1] illustre une première structure d'un empilement monocouche fonctionnelle selon l'invention, la couche fonctionnelle étant déposée directement sur une sous-couche d'oxyde à base de zinc ZnO et directement sous une couche de surblocage, l'empilement étant illustré pendant le traitement à l'aide d'une source produisant un rayonnement ;
- [fig. 2] illustre une seconde structure d'un empilement monocouche fonctionnelle selon l'invention, la couche fonctionnelle étant déposée directement sur une sous-couche d'oxyde à base de zinc ZnO et directement sous une couche de surblocage, l'empilement étant illustré pendant le traitement à l'aide d'une source produisant un rayonnement ;
- [fig. 3] illustre une structure d'un empilement bicouche fonctionnelle selon l'invention, chaque couche fonctionnelle étant déposée directement sur une sous-couche d'oxyde à base de zinc ZnO et directement sous une couche de surblocage, l'empilement étant illustré pendant le traitement à l'aide d'une source produisant un rayonnement ;
- [fig. 4] illustre un double vitrage incorporant un empilement selon l'invention ;
- [fig. 5] illustre un triple vitrage incorporant deux empilements selon l'invention ;
- [fig. 6], [fig. 7] et [fig. 8] illustrent la résistance par carré Rsq de certains exemples selon la première structure d'empilement monocouche fonctionnelle en fonction de l'épaisseur d'une sous-couche d'oxyde à base de zinc ZnO 129, respectivement sans aucun traitement, après une trempe thermique et après un traitement par laser ;
- [fig. 9] et [fig. 10] illustrent le facteur solaire de certains exemples selon la seconde structure d'empilement monocouche fonctionnelle en fonction de l'épaisseur d'une sous-couche d'oxyde à base de zinc ZnO 129 après un traitement par laser ; et
- [fig. 11] et [fig. 12] illustrent le facteur solaire d'autres exemples selon la seconde structure d'empilement monocouche fonctionnelle en fonction de l'épaisseur d'une sous-couche d'oxyde à base de zinc ZnO 129 après un traitement par laser.

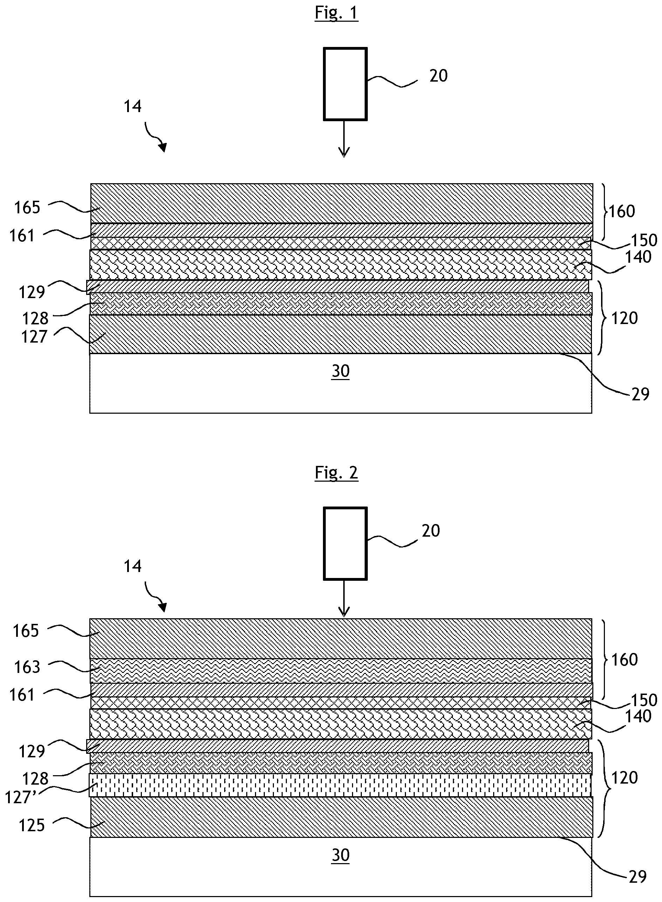

Dans les figures 1 à 5, les proportions entre les épaisseurs des différentes couches ou des différents éléments ne sont pas rigoureusement respectées afin de faciliter leur lecture.

La figure 1 illustre une première structure d'un empilement 14 monocouche fonctionnelle selon l'invention déposé sur une face 29 d'un substrat 30 verrier, transparent, dans laquelle la couche fonctionnelle 140 unique, en particulier à base d'argent ou d'alliage métallique contenant de l'argent, est disposée entre deux revêtements antireflet, le revêtement antireflet 120 sous-jacent situé en dessous de la couche fonctionnelle 140 en direction du substrat 30 et le revêtement antireflet 160 sus-jacent disposé au-dessus de la couche fonctionnelle 140 à l'opposé du substrat 30. Ces deux revêtements antireflet 120, 160, comportent chacun au moins une couche diélectrique 127, 128, 129 ; 161, 165. En figure 1 :
- d'une part le revêtement antireflet 120 situé sous la couche fonctionnelle 140 en direction du substrat 30 comporte :
- une sous-couche d'oxyde à base de zinc, ZnO 129 qui est située sous et au contact de la couche fonctionnelle 140, avec une épaisseur physique de la sous-couche à base d'oxyde de zinc ZnO 129 qui est comprise entre 0,3 et 4,4 nm, voire entre 0,3 et 2,9 nm, voire entre 0,5 et 2,4 nm, voire entre 1,0 et 3,0 nm, voire entre 1,5 et 2,4 nm ; et
- une sous-couche diélectrique d'oxyde mixte à base de zinc et d'étain SnᵢZnⱼO 128 qui est située sous et au contact de la sous-couche d'oxyde à base de zinc ZnO 129, avec une épaisseur physique de la sous-couche diélectrique d'oxyde mixte à base de zinc et d'étain SnᵢZnⱼO 128 qui est comprise entre 3,0 et 50,0 nm, voire entre 4,0 et 40,0 nm, voire entre 5,0 et 35,0 nm ; et
- une sous-couche diélectrique de nitrure à base de silicium Si₃N₄ 127 qui est située sous et au contact de la sous-couche diélectrique d'oxyde mixte à base de zinc et d'étain SnᵢZnⱼO 128, avec une épaisseur physique de la sous-couche diélectrique de nitrure à base de silicium Si₃N₄ 127 qui est comprise entre 5,0 et 30,0 nm, voire entre 5,0 et 20,0 nm, voire entre 5,0 et 10,0 nm ;
- et d'autre part le revêtement antireflet 160 situé au-dessus la couche fonctionnelle 140 à l'opposé du substrat 30 comporte :
- une surcouche d'oxyde à base de zinc, ZnO 161, avec une épaisseur physique de la surcouche d'oxyde à base de zinc, ZnO 161 qui est comprise entre 2,0 et 10,0 nm, voire entre 2,0 et 8,0 nm, voire entre 2,5 et 5,4 nm ; et
- une surcouche diélectrique 165 qui est située sur la surcouche d'oxyde à base de zinc, ZnO 161 et, de préférence une surcouche diélectrique de nitrure à base de silicium, Si₃N₄ ;
- avec en outre une couche de surblocage d'oxyde à base de titane TiOₓ 150 qui est située sur et au contact de la couche fonctionnelle 140 et sous le revêtement antireflet 160 sus-jacent, avec une épaisseur physique de la couche de blocage d'oxyde à base de titane TiOₓ qui est comprise entre 0,3 et 5,0 nm, voire entre 0,3 et 2,9 nm, voire entre 0,5 et 2,4 nm.

La figure 2 illustre une seconde structure d'un empilement 14 monocouche fonctionnelle selon l'invention déposé sur une face 29 d'un substrat 30 verrier, transparent, dans laquelle la couche fonctionnelle 140 unique, en particulier à base d'argent ou d'alliage métallique contenant de l'argent, est disposée entre deux revêtements antireflet, le revêtement antireflet 120 sous-jacent situé en dessous de la couche fonctionnelle 140 en direction du substrat 30 et le revêtement antireflet 160 sus-jacent disposé au-dessus de la couche fonctionnelle 140 à l'opposé du substrat 30. Ces deux revêtements antireflet 120, 160, comportent chacun au moins une couche diélectrique 127, 128, 129 ; 161, 165. En figure 2 :
- d'une part le revêtement antireflet 120 situé sous la couche fonctionnelle 140 en direction du substrat 30 comporte :
- une sous-couche d'oxyde à base de zinc, ZnO 129 qui est située sous et au contact de la couche fonctionnelle 140, avec une épaisseur physique de la sous-couche à base d'oxyde de zinc ZnO 129 qui est comprise entre 0,3 et 4,4 nm, voire entre 0,3 et 2,9 nm, voire entre 0,5 et 2,4 nm, voire entre 1,0 et 3,0 nm, voire entre 1,5 et 2,4 nm ; et
- une sous-couche diélectrique d'oxyde mixte à base de zinc et d'étain SnᵢZnⱼO 128 qui est située sous et au contact de la sous-couche d'oxyde à base de zinc ZnO 129, avec une épaisseur physique de la sous-couche diélectrique d'oxyde mixte à base de zinc et d'étain SnᵢZnⱼO 128 qui est comprise entre 3,0 et 50,0 nm, voire entre 4,0 et 40,0 nm, voire entre 5,0 et 35,0 nm ;
- une sous-couche diélectrique de nitrure à base de silicium-zirconium SiₓN_{y}Zr_{Z} 127', cette sous-couche diélectrique de nitrure étant située sous et au contact de ladite sous-couche diélectrique d'oxyde à base de zinc et d'étain SnᵢZnⱼO 128, avec une épaisseur physique de cette sous-couche diélectrique de nitrure à base de silicium-zirconium SiₓN_{y}Zr_{Z} 127' qui est comprise entre 5,0 et 50,0 nm, voire entre 10,0 et 40,0 nm, voire entre 15,0 et 25,0 nm ; et
- une sous-couche diélectrique primaire de nitrure à base de silicium Si₃N₄ 125 qui est située sous et au contact de la sous-couche diélectrique de nitrure à base de silicium-zirconium SiₓN_{y}Zr_{Z} 127', avec une épaisseur physique de la sous-couche diélectrique primaire de nitrure à base de silicium Si₃N₄ 125 qui est comprise entre 5,0 et 30,0 nm, voire entre 5,0 et 20,0 nm, voire entre 5,0 et 10,0 nm ;
- et d'autre part le revêtement antireflet 160 situé au-dessus la couche fonctionnelle 140 à l'opposé du substrat 30 comporte :
- une surcouche d'oxyde à base de zinc, ZnO 161, avec une épaisseur physique de la surcouche d'oxyde à base de zinc, ZnO 161 qui est comprise entre 2,0 et 10,0 nm, voire entre 2,0 et 8,0 nm, voire entre 2,5 et 5,4 nm ; et
- une surcouche diélectrique 165 qui est située sur la surcouche d'oxyde à base de zinc, ZnO 161 et, de préférence une surcouche diélectrique de nitrure à base de silicium, Si₃N₄ ;
- avec en outre une couche de surblocage d'oxyde à base de titane TiOₓ 150 qui est située sur et au contact de la couche fonctionnelle 140 et sous le revêtement antireflet 160 sus-jacent, avec une épaisseur physique de la couche de blocage d'oxyde à base de titane TiOₓ qui est comprise entre 0,3 et 5,0 nm, voire entre 0,3 et 2,9 nm, voire entre 0,5 et 2,4 nm.

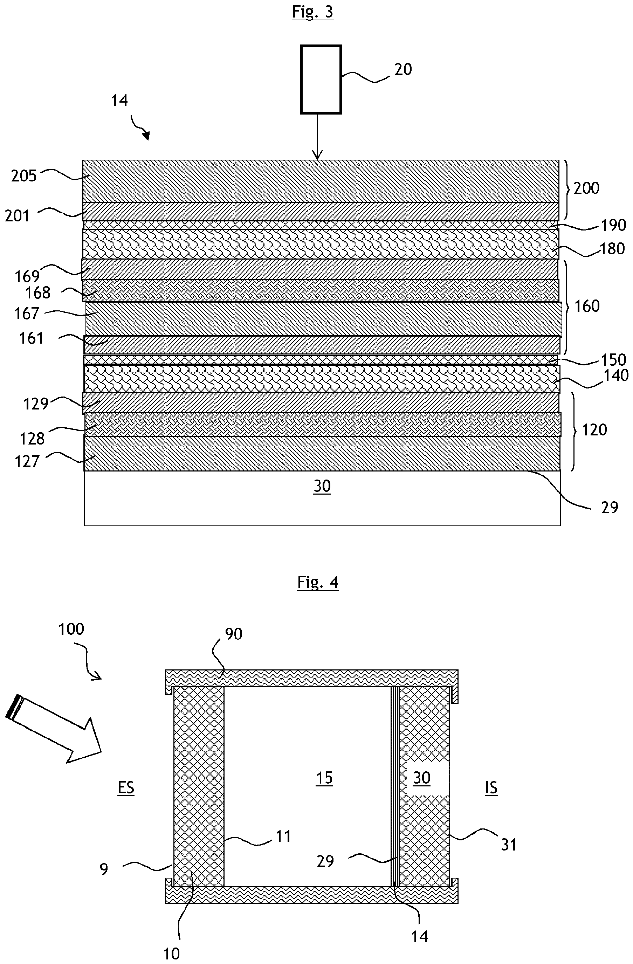

La figure 3 illustre une structure d'un empilement 14 bicouche fonctionnelle selon l'invention déposé sur une face 29 d'un substrat 30 verrier, transparent, dans laquelle les couches fonctionnelles 140, 180, en particulier à base d'argent ou d'alliage métallique contenant de l'argent, sont disposée entre deux revêtements antireflet, le revêtement antireflet 120 sous-jacent situé en dessous de la couche fonctionnelle 140 la plus proche de la face 29 du substrat 30, le revêtement antireflet 160 intermédiaire est située entre les deux couches fonctionnelles et le revêtement antireflet 200 sus-jacent disposé au-dessus de la couche fonctionnelle 180 la plus éloignée de la face 29 du substrat 30. Ces trois revêtements antireflet 120, 160, 200 comportent chacun au moins une couche diélectrique 127, 128, 129 ; 161, 167, 168, 169 ; 201, 205. En figure 2 :
- d'une part le revêtement antireflet situé sous et au contact de chaque couche fonctionnelle 140, 180, comporte, en direction du substrat :
- une sous-couche d'oxyde à base de zinc ZnO, 129, 169, qui est située sous et au contact de la couche fonctionnelle, avec une épaisseur physique de la sous-couche à base d'oxyde de zinc ZnO qui est comprise entre 0,3 et 4,4 nm, voire entre 0,3 et 2,9 nm, voire entre 0,5 et 2,4 nm, voire entre 1,0 et 3,0 nm, voire entre 1,5 et 2,4 nm ;
- une sous-couche diélectrique d'oxyde mixte à base de zinc et d'étain SnᵢZnⱼO 128, 168, qui est située sous et au contact de la sous-couche d'oxyde à base de zinc ZnO, respectivement 129, 169, avec une épaisseur physique de la sous-couche d'oxyde mixte à base de zinc et d'étain SnᵢZnⱼOqui est comprise entre 3,0 et 50,0 nm, voire entre 4,0 et 40,0 nm, voire entre 5,0 et 35,0 nm ; et
- une sous-couche diélectrique de nitrure à base de silicium Si₃N₄ 127, 167, qui est située sous et au contact de la sous-couche d'oxyde mixte à base de zinc et d'étain SnᵢZnⱼO, respectivement 128, 168, avec une épaisseur physique de la sous-couche diélectrique de nitrure à base de silicium Si₃N₄ qui est comprise entre 5,0 et 30,0 nm, voire entre 5,0 et 20,0 nm, voire entre 5,0 et 10,0 nm ;
- d'autre part le revêtement antireflet situé au-dessus et au contact de chaque couche fonctionnelle comporte à l'opposé du substrat :
- une surcouche d'oxyde à base de zinc ZnO 161, 201, avec une épaisseur physique de la surcouche d'oxyde à base de zinc ZnO qui est comprise entre 2,0 et 10,0 nm, voire entre 2,0 et 8,0 nm, voire entre 2,5 et 5,4 nm ; et
- une surcouche diélectrique 205, qui est située sur la surcouche d'oxyde à base de zinc ZnO, 201 et de préférence cette surcouche diélectrique est de nitrure à base de silicium, Si₃N₄
- avec en outre une couche de surblocage d'oxyde à base de titane TiOₓ 150, 190, qui est située sur et au contact de chaque couche fonctionnelle 140, 180 et sous chaque revêtement antireflet 160, 200 sus-jacent, avec une épaisseur physique de la couche de blocage d'oxyde à base de titane TiOₓ qui est comprise entre 0,3 et 5,0 nm, voire entre 0,3 et 2,9 nm, voire entre 0,5 et 2,4 nm.

La couche fonctionnelle 140 est située directement sur le revêtement antireflet 120 sous-jacent et indirectement sous le revêtement antireflet 160, 200 sus-jacent : il n'y a pas de revêtement de sous-blocage situé entre le revêtement antireflet 120 sous-jacent et la couche fonctionnelle 140 mais il y a un revêtement de sur-blocage située entre la couche fonctionnelle 140 et le revêtement antireflet 160, 200, comprenant ici la couche de surblocage d'oxyde à base de titane TiOₓ 150, 190. Il en est de préférence de même pour les autres couches fonctionnelles éventuellement présente : elle est au contact direct du revêtement antireflet situé directement dessous et une couche de surblocage est interposée entre elle et le revêtement antireflet situé au-dessus.

Le revêtement antireflet 160 situé au-dessus de l'unique couche fonctionnelle métallique en figure 1 (ou qui est situé au-dessus de la couche fonctionnelle métallique la plus éloignée du substrat lorsqu'il y en a plusieurs couches fonctionnelles métalliques) peut se terminer par une couche de protection terminale (non illustrée), appelée « overcoat » en anglais, qui est la couche de l'empilement qui est la plus éloignée de la face 29.

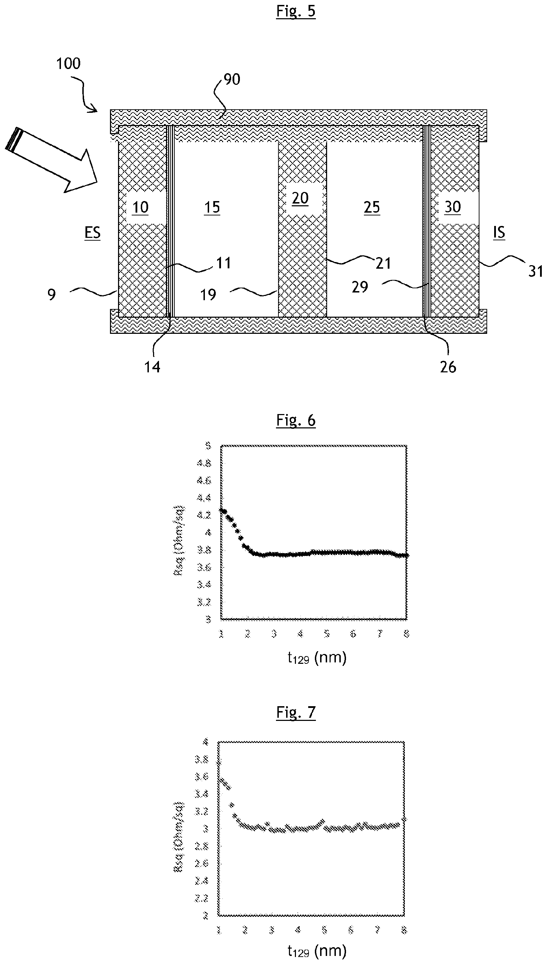

Un tel empilement de couches minces peut être utilisé dans un vitrage multiple 100 réalisant une séparation entre un espace extérieur ES et un espace intérieur IS ; ce vitrage peut présenter une structure :
- de double vitrage, comme illustré en figure 4 : ce vitrage est alors constitué de deux substrats 10, 30 qui sont maintenus ensemble par une structure de châssis 90 et qui sont séparés l'un de l'autre par une lame de gaz intercalaire 15 ; ou
- de triple vitrage, comme illustré en figure 5 : ce vitrage est alors constitué de trois substrats 10, 20, 30, séparée deux par deux par une lame de gaz intermédiaire 15, 25, le tout étant maintenu ensemble par une structure de châssis 90.

Dans les figures 4 et 5, le sens incident de la lumière solaire entrant dans le bâtiment est illustré par la double flèche, à gauche.

En figure 4, l'empilement 14 de couches minces peut être positionné en face 3 (sur la feuille la plus à l'intérieur du bâtiment en considérant le sens incident de la lumière solaire entrant dans le bâtiment et sur sa face tournée vers la lame de gaz), c'est-à-dire sur une face intérieure 29 du substrat 30 en contact avec la lame de gaz intercalaire 15, l'autre face 31 du substrat 30 étant en contact avec l'espace intérieur IS.

Toutefois, il peut aussi être envisagé que dans cette structure de double vitrage, l'un des substrats présente une structure feuilletée.

En figure 5, il y a deux empilements de couches minces, de préférence identiques :
- un empilement 14 de couches minces est positionné en face 2 (sur la feuille la plus à l'extérieur du bâtiment en considérant le sens incident de la lumière solaire entrant dans le bâtiment et sur sa face tournée vers la lame de gaz), c'est-à-dire sur une face intérieure 11 du substrat 10 en contact avec la lame de gaz intercalaire 15, l'autre face 9 du substrat 10 étant en contact avec l'espace extérieur ES ;
- et un empilement 26 de couches minces est positionné en face 5 (sur la feuille la plus à l'intérieur du bâtiment en considérant le sens incident de la lumière solaire entrant dans le bâtiment et sur sa face tournée vers la lame de gaz), c'est-à-dire sur une face intérieure 29 du substrat 30 en contact avec la lame de gaz intercalaire 25, l'autre face 31 du substrat 30 étant en contact avec l'espace intérieur IS.

Une première série d'exemples a été réalisé sur la base de la structure d'empilement illustrée en figure 1 avec, en partant de la surface 29, uniquement les couches suivantes, dans cet ordre :
- une sous-couche diélectrique de nitrure à base de silicium Si₃N₄ 127 d'une épaisseur physique de 10,0 nm, déposée à partir d'une cible en silicium dopé à l'aluminium, à 92 % en poids de silicium et 8 % en poids d'aluminium dans une atmosphère à 45 % d'azote sur le total d'azote et d'argon et sous une pression de 1,5.10⁻³ mbar ;
- une sous-couche diélectrique d'oxyde mixte à base de zinc et d'étain SnᵢZnⱼO 128, avec une épaisseur physique de 10,0 nm, déposée à partir d'une cible métallique 60 % en poids d'étain et 40 % en poids de zinc dans une atmosphère d'argon et d'oxygène à 60 % d'oxygène sur le total d'oxygène et d'argon et sous une pression de 2.10⁻³ mbar ;
- une sous-couche d'oxyde à base de zinc, ZnO 129, d'une épaisseur physique variable, variant de 1,0 nm à 8,0 nm, déposée à partir d'une cible céramique constituée de 49 % atomique de zinc et 49 % atomique d'oxygène et dopée à l'aluminium à 2%, dans une atmosphère d'argon et sous une pression de 2.10⁻³ mbar ;
- une couche fonctionnelle métallique 140 à base d'argent, et plus précisément ici en argent, d'une épaisseur physique de 12,0 nm, déposée à partir d'une cible métallique en argent, dans une atmosphère d'argon et sous une pression de 2.10⁻³ mbar ;
- une couche de surblocage d'oxyde à base de titane TiOₓ 150 qui est située sur la couche fonctionnelle 140, d'une épaisseur physique de 0,7 nm, déposée à partir d'une cible en dioxyde de titane dans une atmosphère à 5 % d'oxygène sur le total d'oxygène et d'argon et sous une pression de 2.10⁻³ mbar ;
- une surcouche d'oxyde à base de zinc ZnO 161, d'une épaisseur physique de 5,0 nm, déposée à partir d'une cible céramique constituée de 49 % atomique de zinc et 49 % atomique d'oxygène et dopée à l'aluminium à 2 %, dans une atmosphère d'argon et sous une pression de 2.10⁻³ mbar ;
- une surcouche diélectrique 165 de nitrure à base de silicium Si₃N₄, d'une épaisseur physique de 30,0 nm, déposée à partir d'une cible en silicium dopé à l'aluminium, à 92% en poids de silicium et 8 % en poids d'aluminium dans une atmosphère à 45 % d'azote sur le total d'azote et d'argon et sous une pression de 2.10⁻³ mbar.

La figure 6 illustre la résistance par carré de ces empilements en fonction de l'épaisseur de la sous-couche d'oxyde à base de zinc ZnO 129 après le dépôt de l'empilement et sans aucun traitement thermique.

La figure 7 illustre la résistance par carré de ces empilements en fonction de l'épaisseur de la sous-couche d'oxyde à base de zinc ZnO 129 après le dépôt de l'empilement et après un traitement thermique de trempe d'une durée de 5 minutes à une température de 650 °C. Cette figure montre un effet néfaste aux environs de 5 nm. Il est donc important de prévoir une sous-couche d'oxyde à base de zinc ZnO 129 (avec une épaisseur minimum, pour constituer une couche, qui est de l'ordre 0,3 nm) mais l'épaisseur de cette sous-couche d'oxyde à base de zinc ZnO 129 doit rester inférieure à environ 5,0 nm.

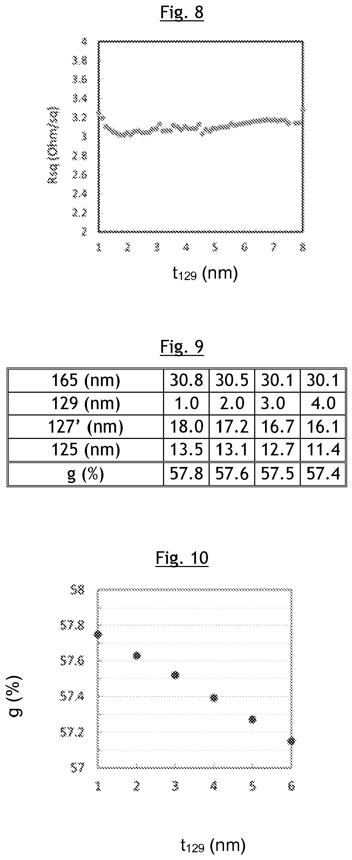

La figure 8 illustre la résistance par carré de ces empilements après le dépôt et après avoir subi un traitement de laser constistant ici en un défilement du substrat 30 à une vitesse de 4 m/min sous une ligne laser 20 de 0,08 mm de large, 11,6 mm de long et de puissance totale de 433 W avec la ligne laser orientée perpendiculairement à la face 29 et en direction de l'empilement 14, c'est-à-dire en disposant la ligne laser au-dessus de l'empilement, comme visible en figure 1 (la flèche noire droite illustrant l'orientation de la lumière émise).

La résistance par carré est au moins aussi bonne, voire meilleure (plus basse) après traitement laser qu'après traitement thermique pour les épaisseurs de sous-couche d'oxyde à base de zinc ZnO 129 qui sont comprises entre 0,3 et 4,4 nm, c'est-à-dire sans atteindre environ 5,0 nm. Elle est en particulier plus basse pour les épaisseurs de sous-couche d'oxyde à base de zinc ZnO 129 qui sont comprises entre 0,3 et 2,9 nm, voire entre 0,5 et 2,4 nm.

Une seconde série d'exemples a été réalisée sur la base de la structure d'empilement illustrée en figure 2 avec, en partant de la surface 29, uniquement les couches suivantes, dans cet ordre :
- une sous-couche diélectrique primaire de nitrure à base de silicium Si₃N₄ 125 d'une épaisseur physique de 13,5 nm à 12,6 nm, déposée à partir d'une cible en silicium dopé à l'aluminium, à 92% en poids de silicium et 8 % en poids d'aluminium dans une atmosphère à 45 % d'azote sur le total d'azote et d'argon et sous une pression de 1,5.10⁻³ mbar ;
- une sous-couche diélectrique de nitrure à base de silicium-zirconium, SiₓN_{y}Zr_{Z} 127' d'une épaisseur physique de 18,0 nm à 15,0 nm, déposée à partir d'une cible en silicium-zirconium à 73 % atomique de silicium et 27% atomique de zirconium dans une atmosphère à 45 % d'azote sur le total d'azote et d'argon et sous une pression de 1,5.10⁻³ mbar ;
- une sous-couche diélectrique d'oxyde mixte à base de zinc et d'étain SnᵢZnⱼO 128, avec une épaisseur physique de 10,0 nm, déposée à partir d'une cible métallique à 60 % en poids d'étain et 40 % en poids de zinc dans une atmosphère d'argon et d'oxygène à 60 % d'oxygène sur le total d'oxygène et d'argon et sous une pression de 2.10⁻³ mbar ;
- une sous-couche d'oxyde à base de zinc ZnO, 129, d'une épaisseur physique variable, de 1,0 nm à 6,0 nm, déposée à partir d'une cible céramique constituée de 49 % atomique de zinc et 49 % atomique d'oxygène et dopée à l'aluminium à 2 %, dans une atmosphère d'argon et sous une pression de 2.10⁻³ mbar ;
- une couche fonctionnelle métallique 140 à base d'argent, et même précisément ici en argent, d'une épaisseur physique de 10,0 nm, déposée à partir d'une cible métallique en argent, dans une atmosphère d'argon et sous une pression de 2.10⁻³ mbar ;
- une couche de surblocage d'oxyde à base de titane TiOₓ 150 qui est située sur la couche fonctionnelle 140, d'une épaisseur physique de 0,7 nm, déposée à partir d'une cible en dioxyde de titane dans une atmosphère à 5 % d'oxygène sur le total d'oxygène et d'argon et sous une pression de 2.10⁻³ mbar ;
- une surcouche d'oxyde à base de zinc ZnO 161, d'une épaisseur physique de 5,0 nm, déposée à partir d'une cible céramique constituée de 49 % atomique de zinc et 49 % atomique d'oxygène et dopée à l'aluminium à 2 %, dans une atmosphère d'argon et sous une pression de 2.10⁻³ mbar ;
- une surcouche diélectrique 165 de nitrure à base de silicium, Si₃N₄, d'une épaisseur physique de 30,8 nm à 29,4 nm, déposée à partir d'une cible en silicium dopé à l'aluminium, à 92% en poids de silicium et 8 % en poids d'aluminium dans une atmosphère à 45 % d'azote sur le total d'azote et d'argon et sous une pression de 2.10⁻³ mbar.

Le tableau de la figure 9 récapitule les épaisseurs des couches 125, 127', 129 et 165 des cinq exemples de cette seconde série.

Tous ces exemples ont fait l'objet du même traitement par laser que précédemment, puis ont été monté en triple vitrage dans une structure du type de celle illustrée en figure 5. Il s'agit pour ces exemples d'une configuration : 4-16 (Ar 90%)-4-16 (Ar 90%)-4, c'est-à-dire qu'elle est constituée de trois feuilles de verre transparent de 4 mm, réalisant chacune un substrat 10, 20, 30, séparées deux par deux par une lame de gaz intermédiaire 15, 25 à 90 % d'argon et 10 % d'air d'une épaisseur chacune de 16 mm, le tout étant maintenus ensemble par une structure de châssis 90.

Les deux substrats 10, 30 extérieurs de ce triple vitrage sont revêtus, chacun, sur sa face intérieure 11, 29 tournée vers la lame de gaz intermédiaire 15, 25, d'un revêtement isolant 14, 26 constitué de l'empilement monocouche fonctionnelle décrit ci-avant : les empilements monocouche fonctionnelle sont ainsi en faces dites « face 2 » et « face 5 »).

Le substrat 20 central de ce triple vitrage, celui dont les deux faces 19, 21 sont en contact respectivement avec les lames de gaz intermédiaire 15 et 25, n'est revêtu d'aucun revêtement sur aucune de ces faces.

La dernière ligne du tableau de la figure 9, ainsi que la figure 10 illustrent l'évolution, en ordonnée en figure 10, du facteur solaire, g, en pourcent, en fonction de l'épaisseur, t₁₂₉, en nanomètres de la sous-couche d'oxyde à base de zinc ZnO 129 en abscisse, ce facteur solaire étant mesurée immédiatement après le traitement laser des deux substrats 10, 30, puis leur intégration pour former le triple vitrage. Le facteur solaire est ainsi amélioré lorsque la sous-couche d'oxyde à base de zinc ZnO 129 est entre 0,3 et 4,4 nm. Le facteur solaire est particulièrement favorable pour une épaisseur de cette sous-couche d'oxyde à base de zinc ZnO 129 entre 1,0 et 3,0 nm, voire entre 1,5 et 2,4 nm.

Il a été constaté avec surprise que pour une épaisseur de sous-couche d'oxyde à base de zinc ZnO 129 de 1,0 nm et une épaisseur de la couche fonctionnelle 140 de 10,0 nm pour les deux empilements 14, 26, le facteur solaire du triple vitrage est monté à 58,1 % ; soit un gain de + 0,5 de facteur solaire en diminuant l'épaisseur de la sous-couche d'oxyde à base de zinc ZnO 129 de 5,0 nm à 1,0 nm ; ce gain peut encore être augmenté en diminuant encore un peu l'épaisseur de la sous-couche d'oxyde à base de zinc ZnO 129 à 0,5 nm, voire 0,3 nm.

Pour confirmer cet effet, une troisième série d'exemples a été réalisée sur la base de la structure d'empilement illustrée en figure 2 avec, en partant de la surface 29, uniquement les couches suivantes, dans cet ordre :
- une sous-couche diélectrique primaire de nitrure à base de silicium Si₃N₄ 125 d'une épaisseur physique variant entre environ 3,7 nm et environ 2,4 nm, déposée à partir d'une cible en silicium dopé à l'aluminium, à 92% en poids de silicium et 8 % en poids d'aluminium dans une atmosphère à 45 % d'azote sur le total d'azote et d'argon et sous une pression de 1,5.10⁻³ mbar ;
- une sous-couche diélectrique de nitrure à base de silicium-zirconium SiₓN_{y}Zr_{Z} 127' d'une épaisseur physique variant entre environ 13,8 nm et environ 11,2 nm, déposée à partir d'une cible en silicium-zirconium à 73 % atomique de silicium et 27% atomique de zirconium dans une atmosphère à 45 % d'azote sur le total d'azote et d'argon et sous une pression de 1,5.10⁻³ mbar ;
- une sous-couche diélectrique d'oxyde mixte à base de zinc et d'étain SnᵢZnⱼO 128, avec une épaisseur physique de 10,0 nm, déposée à partir d'une cible métallique à 60 % en poids d'étain et 40 % en poids de zinc dans une atmosphère d'argon et d'oxygène à 60 % d'oxygène sur le total d'oxygène et d'argon et sous une pression de 2.10⁻³ mbar ;
- une sous-couche d'oxyde à base de zinc ZnO 129, d'une épaisseur physique variable, de 1,0 nm à 6,0 nm, déposée à partir d'une cible céramique constituée de 49 % atomique de zinc et 49 % atomique d'oxygène et dopée à l'aluminium à 2 % , dans une atmosphère d'argon et sous une pression de 2.10⁻³ mbar ;
- une couche fonctionnelle métallique 140 à base d'argent, et même précisément ici en argent, d'une épaisseur physique de 15,0 nm, déposée à partir d'une cible métallique en argent, dans une atmosphère d'argon et sous une pression de 2.10⁻³ mbar ;
- une couche de surblocage d'oxyde à base de titane TiOₓ 150 qui est située sur la couche fonctionnelle 140, d'une épaisseur physique de 0,7 nm, déposée à partir d'une cible en dioxyde de titane dans une atmosphère à 5 % d'oxygène sur le total d'oxygène et d'argon et sous une pression de 2.10⁻³ mbar ;
- une surcouche à base d'oxyde de zinc ZnO 161, d'une épaisseur physique de 5,0 nm, déposée à partir d'une cible céramique constituée de 49 % atomique de zinc et 49 % atomique d'oxygène et dopée à l'aluminium à 2 %, dans une atmosphère d'argon et sous une pression de 2.10⁻³ mbar ;
- une surcouche diélectrique 165 de nitrure à base de silicium Si₃N₄, d'une épaisseur physique variant entre environ 31,6 nm et environ 32,4 nm, déposée à partir d'une cible en silicium dopé à l'aluminium, à 92% en poids de silicium et 8 % en poids d'aluminium dans une atmosphère à 45 % d'azote sur le total d'azote et d'argon et sous une pression de 2.10⁻³ mbar.

Tous ces exemples ont fait l'objet du même traitement par laser que précédemment, puis ont été montés en double vitrage dans une structure du type de celle illustrée en figure 4. Il s'agit pour ces exemples d'une configuration : 4-16 (Ar 90%)-4, c'est-à-dire qu'elle est constituée de deux feuilles de verre transparent de 4 mm, réalisant chacune un substrat 10, 30, séparées par une lame de gaz intermédiaire 15 à 90 % d'argon et 10 % d'air d'une épaisseur de 16 mm, le tout étant maintenus ensemble par une structure de châssis 90.

Le substrat 30 intérieur de ce double vitrage est revêtus sur sa face intérieure 29 tournée vers la lame de gaz intermédiaire 15 d'un revêtement isolant 14 constitué de l'empilement monocouche fonctionnelle décrit ci-avant : l'empilement monocouche fonctionnelle sont ainsi en face dites « face 3 »).

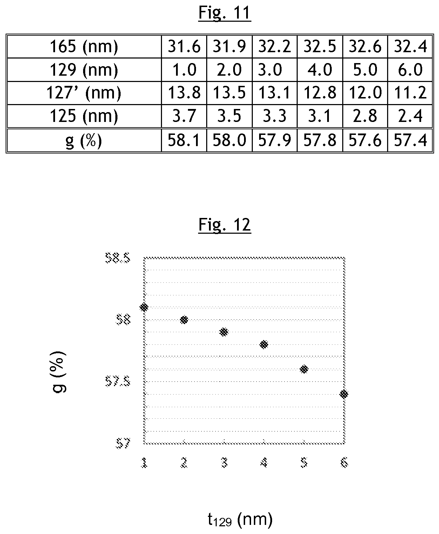

Le tableau de la figure 11 récapitule l'épaisseur exacte des couches 125, 127', 129 et 165, en nm, pour les 6 exemples de sous-couche d'oxyde à base de zinc ZnO 129, d'une épaisseur physique variant de 1,0 nm à 6,0 nm.

La dernière ligne du tableau de la figure 11, ainsi que la figure 12 illustrent l'évolution en ordonnée du facteur solaire, g, en pourcent, en fonction de l'épaisseur, t₁₂₉, en nanomètres de cette sous-couche d'oxyde à base de zinc ZnO 129 en abscisse, ce facteur solaire étant mesuré immédiatement après le traitement laser des deux substrats 10, 30, puis leur intégration pour former le triple vitrage. Le facteur solaire passe de 57,4 % pour un vitrage dont l'empilement comporte une sous-couche d'oxyde à base de zinc ZnO 129 de 6,0 nm à 58,1 % pour un vitrage dont l'empilement comporte une sous-couche d'oxyde à base de zinc ZnO 129 de 1,0 nm ; le facteur solaire est ainsi clairement amélioré, d'une manière inattendue, lorsque la sous-couche d'oxyde à base de zinc ZnO 129 est entre 0,3 et 4,4 nm. Le facteur solaire est particulièrement favorable pour une épaisseur de sous-couche d'oxyde à base de zinc ZnO 129 entre 0,3 et 2,9 nm, voire entre 0,5 et 2,4.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Matériau comprenant un substrat (30) verrier revêtu sur une face (29) d'un empilement de couches minces (14) à propriétés de réflexion dans l'infrarouge et/ou dans le rayonnement solaire comportant au moins une couche fonctionnelle métallique (140), en particulier à base d'argent ou d'alliage métallique contenant de l'argent et au moins deux revêtements antireflet (120, 160), lesdits revêtements antireflet comportant chacun au moins une couche diélectrique (125, 165), ladite couche fonctionnelle (140) étant disposée entre les deux revêtements antireflet (120, 160), ***caractérisé en ce que*** ledit revêtement antireflet (120) sous-jacent, situé sous ladite couche fonctionnelle (140) en direction dudit substrat (30), comporte :
- une sous-couche d'oxyde à base de zinc ZnO (129) qui est située sous et au contact de ladite couche fonctionnelle (140), avec une épaisseur physique de ladite sous-couche d'oxyde à base de zinc ZnO (129) qui est comprise entre 0,3 et 4,4 nm, voire entre 0,3 et 2,9 nm, voire entre 0,5 et 2,4 nm ;
- une sous-couche diélectrique d'oxyde mixte à base de zinc et d'étain SnᵢZnⱼO (128), avec une épaisseur physique de ladite sous-couche diélectrique d'oxyde mixte à base de zinc et d'étain SnᵢZnⱼO (128) qui est comprise entre 3,0 et 50,0 nm, voire entre 4,0 et 40,0 nm, voire entre 5,0 et 35,0 nm ;
- une sous-couche diélectrique de nitrure à base de silicium Si₃N₄ (127) ou à base de silicium-zirconium SiₓN_{y}Zr_{Z} (127'), qui est située sous et au contact de ladite sous-couche diélectrique d'oxyde à base de zinc et d'étain SnᵢZnⱼO (128), avec une épaisseur physique de ladite sous-couche diélectrique de nitrure à base de silicium Si₃N₄ (127) ou à base de silicium-zirconium SiₓN_{y}Zr_{Z} (127') qui est comprise entre 5,0 et 50,0 nm, voire entre 10,0 et 40,0 nm, voire entre 15,0 et 25,0 nm ;
***en ce que*** ledit revêtement antireflet (160) sus-jacent, situé au-dessus ladite couche fonctionnelle (140) à l'opposé dudit substrat (30), comporte :
- une surcouche d'oxyde à base de zinc ZnO (161), avec une épaisseur physique de ladite surcouche d'oxyde à base de zinc ZnO (161) qui est comprise entre 2,0 et 10,0 nm, voire entre 2,0 et 8,0 nm, voire entre 2,5 et 5,4 nm ; et
- une surcouche diélectrique (165) qui est située sur ladite surcouche d'oxyde à base de zinc ZnO (161) et, de préférence une surcouche diélectrique de nitrure à base de silicium, Si₃N₄,
*et* ***en ce* qu'**une couche de surblocage d'oxyde à base de titane TiOₓ (150) est située sur et au contact de ladite couche fonctionnelle (140) et sous ledit revêtement antireflet (160) sus-jacent, avec une épaisseur physique de ladite couche de blocage d'oxyde à base de titane TiOₓ (150) qui est comprise entre 0,3 et 5,0 nm, voire entre 0,3 et 2,9 nm, voire entre 0,5 et 2,4 nm.

2. Matériau selon la revendication 1, dans lequel ladite sous-couche diélectrique de nitrure est à base de silicium-zirconium SiₓN_{y}Zr_{Z} (127') et présente un rapport atomique de silicium sur zirconium, x/z, compris entre 2,2 et 5,6, voire entre 2,9 et 5,6, voire entre 3,0 et 4,8, ladite sous-couche diélectrique de nitrure à base de silicium-zirconium SiₓN_{y}Zr_{Z} (127') ne comportant de préférence pas d'oxygène.

3. Matériau selon la revendication 1 ou 2, dans lequel ladite couche fonctionnelle métallique (140), ou chaque fonctionnelle métallique, présente une épaisseur physique qui est comprise entre 8,0 et 22,0 nm, voire entre 9,0 et 16,4 nm, voire entre 9,5 et 12,4 nm.

4. Matériau selon l'une quelconque des revendications 1 à 3, dans lequel ledit revêtement antireflet (120) sous-jacent, situé sous ladite couche fonctionnelle métallique (140), et/ou ledit revêtement antireflet (160) sus-jacent, situé au-dessus ladite couche fonctionnelle métallique (140), ne comporte aucune couche à l'état métallique.

5. Matériau selon l'une quelconque des revendications 1 à 4, dans lequel ladite sous-couche de nitrure est à base de silicium-zirconium SiₓN_{y}Zr_{Z} (127') et une sous-couche diélectrique primaire de nitrure à base de silicium Si₃N₄ (125) est située sous et au contact de cette sous-couche de nitrure à base de silicium-zirconium SiₓN_{y}Zr_{Z} (127'), avec une épaisseur physique de ladite sous-couche diélectrique primaire de nitrure à base de silicium Si₃N₄ (125) qui est comprise entre 5,0 et 30,0 nm, voire entre 5,0 et 20,0 nm, voire entre 5,0 et 10,0 nm.

6. Matériau selon la revendication 1, dans lequel ladite sous-couche diélectrique de nitrure est à base de silicium Si₃N₄ (127) et ne comporte pas d'oxygène.

7. Matériau selon l'une quelconque des revendications 1 à 6, dans lequel ladite sous-couche d'oxyde à base de zinc ZnO (129) et/ou ladite surcouche d'oxyde à base de zinc ZnO (161) est constituée d'oxyde de zinc ZnO dopé à l'aluminium.

8. Matériau selon l'une quelconque des revendications 1 à 7, dans lequel ledit revêtement antireflet (160) sus-jacent, situé au-dessus de ladite couche fonctionnelle (140), comporte en outre une surcouche intermédiaire diélectrique (163) située entre ladite surcouche à base d'oxyde de zinc ZnO (161) et ladite surcouche diélectrique (165), cette surcouche intermédiaire diélectrique (163) étant oxydée et comprenant de préférence : un oxyde de titane TiOₓ ou un oxyde mixte de zinc et d'étain.

9. Vitrage multiple comportant un matériau selon l'une quelconque des revendications 1 à 8, et au moins un autre substrat (10), les substrats (10, 30) étant maintenus ensemble par une structure de châssis (90), ledit vitrage réalisant une séparation entre un espace extérieur (ES) et un espace intérieur (IS), dans lequel au moins une lame de gaz intercalaire (15) est disposée entre les deux substrats.

10. Procédé d'obtention d'un matériau comportant un substrat (30) verrier revêtu sur une face (29) d'un empilement de couches minces (14) à propriétés de réflexion dans l'infrarouge et/ou dans le rayonnement solaire comportant au moins une couche fonctionnelle métallique (140), en particulier à base d'argent ou d'alliage métallique contenant de l'argent et deux revêtements antireflet (120, 160), lesdits revêtements antireflet comportant chacun au moins une couche diélectrique (127, 165), ladite couche fonctionnelle (140) étant disposée entre les deux revêtements antireflet (120, 160), ledit procédé comprenant les étapes suivantes, dans l'ordre :
- le dépôt sur une face (29) dudit substrat (30) d'un empilement de couches minces (14) à propriétés de réflexion dans l'infrarouge et/ou dans le rayonnement solaire comportant au moins une couche fonctionnelle métallique (140), en particulier à base d'argent ou d'alliage métallique contenant de l'argent et au moins deux revêtements antireflet (120, 160), afin de former un matériau selon l'une quelconque des revendications 1 à 8, puis
- le traitement dudit empilement de couches minces (14) à l'aide d'une source produisant un rayonnement et notamment un rayonnement infrarouge.

11. Procédé selon la revendication 10, dans lequel ledit traitement est opéré dans une atmosphère ne comprenant pas d'oxygène.

12. Procédé selon la revendication 10 ou 11, dans lequel ladite sous-couche d'oxyde à base de zinc ZnO (129) est déposée à partir d'une cible céramique comprenant du ZnO et dans une atmosphère ne comportant pas d'oxygène ou comportant au plus 10,0 % d'oxygène.

## Patentansprüche

1. Material, umfassend ein Glassubstrat (30), das auf einer Fläche (29) mit einer Stapelung von Dünnschichten (14) mit Reflexionseigenschaften in dem Infrarot- und/oder in dem Sonnenstrahlungsbereich beschichtet ist, die mindestens eine funktionelle Metallschicht (140), insbesondere auf Basis von Silber oder einer Metalllegierung, die Silber enthält, und mindestens zwei Antireflexbeschichtungen (120, 160) aufweist, wobei die Antireflexbeschichtungen jeweils mindestens eine dielektrische Schicht (125, 165) aufweisen, wobei die funktionelle Schicht (140) zwischen den zwei Antireflexbeschichtungen (120, 160) angeordnet ist, **dadurch gekennzeichnet, dass** die darunterliegende Antireflexbeschichtung (120), die unter der funktionellen Schicht (140) in Richtung des Substrats (30) gelegen ist, aufweist: - eine Unterschicht aus Oxid auf Basis von Zink ZnO (129), die unter und in Kontakt mit der funktionellen Schicht (140) gelegen ist, mit einer physikalischen Dicke der Unterschicht aus Oxid auf Basis von Zink ZnO (129), die zwischen 0,3 und 4,4 nm, oder sogar zwischen 0,3 und 2,9 nm, oder sogar zwischen 0,5 und 2,4 nm liegt;
- eine dielektrische Unterschicht aus Mischoxid auf Basis von Zink und Zinn SnᵢZnⱼO (128), mit einer physikalischen Dicke der dielektrischen Unterschicht aus Mischoxid auf Basis von Zink und Zinn SnᵢZnⱼO (128), die zwischen 3,0 und 50,0 nm oder sogar zwischen 4,0 und 40,0 nm oder sogar zwischen 5,0 und 35,0 nm liegt;
- eine dielektrische Unterschicht aus Nitrid auf Basis von Silizium Si₃N₄ (127) oder auf Basis von Siliziumzirkonium SiₓN_{y}Zr_{z} (127'), die unter und in Kontakt mit der dielektrischen Unterschicht aus Oxid auf Basis von Zink und Zinn SnᵢZnⱼO (128) gelegen ist, mit einer physikalischen Dicke der dielektrischen Unterschicht aus Nitrid auf Basis von Silizium S_{I3}N₄ (127) oder auf Basis von Siliziumzirkonium SiₓN_{y}Zr_{z} (127'), die zwischen 5,0 und 50,0 nm oder sogar zwischen 10,0 und 40,0 nm oder sogar zwischen 15,0 und 25,0 nm liegt;
***dass*** die darüberliegende Antireflexbeschichtung (160), die über der funktionellen Schicht (140) gegenüber dem Substrat (30) gelegen ist, aufweist:
- eine Überschicht aus Oxid auf Basis von Zink ZnO (161) mit einer physikalischen Dicke der Überschicht aus Oxid auf Basis von Zink ZnO (161), die zwischen 2,0 und 10,0 nm oder sogar zwischen 2,0 und 8,0 nm oder sogar zwischen 2,5 und 5,4 nm liegt; und
- eine dielektrische Überschicht (165), die auf der Überschicht aus Oxid auf Basis von Zink ZnO (161) gelegen ist, und vorzugsweise eine dielektrische Überschicht aus Nitrid auf Basis von Silizium, Si₃N₄,
und **dass** eine Überblockierungsschicht aus Oxid auf Basis von Titan TiOₓ (150) auf und in Kontakt mit der funktionellen Schicht (140) und unter der darüberliegenden Antireflexbeschichtung (160) gelegen ist, mit einer physikalischen Dicke der Blockierungsschicht aus Oxid auf Basis von Titan TiOₓ (150), die zwischen 0,3 und 5,0 nm, sogar zwischen 0,3 und 2,9 nm oder sogar zwischen 0,5 und 2,4 nm liegt.

2. Material nach Anspruch 1, wobei die dielektrische Unterschicht aus Nitrid auf Basis von Siliziumzirkonium SiₓN_{y}Zr_{z} (127') ist und ein Atomverhältnis von Silizium zu Zirkonium, x/z, zwischen 2,2 und 5,6 oder sogar zwischen 2,9 und 5,6 oder sogar zwischen 3,0 und 4,8 vorweist, wobei die dielektrische Unterschicht aus Nitrid auf Basis von Siliziumzirkonium SiₓN_{y}Zr_{z} (127') vorzugsweise keinen Sauerstoff aufweist.

3. Material nach Anspruch 1 oder 2, wobei die funktionelle Metallschicht (140) oder jede metallische Funktion eine physikalische Dicke vorweist, die zwischen 8,0 und 22,0 nm oder sogar zwischen 9,0 und 16,4 nm oder sogar zwischen 9,5 und 12,4 nm liegt.

4. Material nach einem der Ansprüche 1 bis 3, wobei die darunterliegende Antireflexbeschichtung (120), die unter der funktionellen Metallschicht (140) gelegen ist und/oder die darüberliegende Antireflexbeschichtung (160), die über der funktionellen Metallschicht (140) gelegen ist, überhaupt keine Schicht in dem metallischen Zustand aufweist.

5. Material nach einem der Ansprüche 1 bis 4, wobei die Unterschicht aus Nitrid auf Basis von Siliziumzirkonium SiₓN_{y}Zr_{z} (127') ist und eine primäre dielektrische Unterschicht aus Nitrid auf Basis von Silizium Si₃N₄ (125) unter und in Kontakt mit dieser Unterschicht aus Nitrid auf Basis von Siliziumzirkonium SiₓN_{y}Zr_{z} (127') gelegen ist, mit einer physikalischen Dicke der primären dielektrischen Unterschicht aus Nitrid auf Basis von Silizium Si₃N₄ (125), die zwischen 5,0 und 30,0 nm oder sogar zwischen 5,0 und 20,0 nm oder sogar zwischen 5,0 und 10,0 nm liegt.

6. Material nach Anspruch 1, wobei die dielektrische Unterschicht aus Nitrid auf Basis von Silizium Si₃N₄ (127) ist und keinen Sauerstoff aufweist.

7. Material nach einem der Ansprüche 1 bis 6, wobei die Unterschicht aus Oxid auf Basis von Zink ZnO (129) und/oder die Überschicht aus Oxid auf Basis von Zink ZnO (161) aus mit Aluminium dotiertem Zinkoxid ZnO besteht.

8. Material nach einem der Ansprüche 1 bis 7, wobei die darüberliegende Antireflexbeschichtung (160), die über der funktionellen Schicht (140) gelegen ist, ferner eine dielektrische Zwischenüberschicht (163) umfasst, die zwischen der Überschicht auf Basis von Zinkoxid ZnO (161) und der dielektrischen Überschicht (165) gelegen ist, wobei diese dielektrische Zwischenüberschicht (163) oxidiert ist und vorzugsweise umfasst: ein Titanoxid TiOₓ oder ein Mischoxid aus Zink und aus Zinn.

9. Mehrfachverglasung, die mindestens ein Material nach einem der Ansprüche 1 bis 8 und mindestens ein anderes Substrat (10) aufweist, wobei die Substrate (10, 30) durch eine Rahmenstruktur (90) zusammengehalten werden, wobei die Verglasung eine Trennung zwischen einem Außenraum (ES) und einem Innenraum (IS) herstellt, wobei mindestens ein Zwischenlagengasspalt (15) zwischen den zwei Substraten angeordnet ist.

10. Verfahren zum Gewinnen eines Materials, das ein Glassubstrat (30) aufweist, das auf einer Fläche (29) mit einer Stapelung von Dünnschichten (14) mit Reflexionseigenschaften in dem Infrarot- und/oder in dem Sonnenstrahlungsbereich beschichtet ist, die mindestens eine funktionelle Metallschicht (140), insbesondere auf Basis von Silber oder einer Metalllegierung, die Silber enthält, und zwei Antireflexbeschichtungen (120, 160) aufweist, wobei die Antireflexbeschichtungen jeweils mindestens eine dielektrische Schicht (127, 165) aufweisen, wobei die funktionelle Schicht (140) zwischen den zwei Antireflexbeschichtungen (120, 160) angeordnet ist, das Verfahren umfassend die folgenden Schritte der Reihe nach:
- Abscheiden auf eine Fläche (29) des Substrats (30) einer Stapelung von Dünnschichten (14) mit Reflexionseigenschaften in dem Infrarot- und/oder in dem Sonnenstrahlungsbereich, die mindestens eine funktionelle Metallschicht (140), insbesondere auf Basis von Silber oder einer Metalllegierung, die Silber enthält, und mindestens zwei Antireflexbeschichtungen (120, 160) aufweist, um ein Material nach einem der Ansprüche 1 bis 8 auszubilden, dann
- Behandeln der Stapelung von Dünnschichten (14) mithilfe einer Quelle, die eine Strahlung und insbesondere eine Infrarotstrahlung produziert.

11. Verfahren nach Anspruch 10, wobei das Behandeln in einer Atmosphäre durchgeführt wird, umfassend keinen Sauerstoff.

12. Verfahren nach Anspruch 10 oder 11, wobei die Unterschicht aus Oxid auf Basis von Zink ZnO (129) von einem Keramikziel, umfassend ZnO, und in einer Atmosphäre, die keinen Sauerstoff aufweist oder mehr als 10,0 % Sauerstoff aufweist, abgeschieden wird.

## Claims

1. A material comprising a glass substrate (30) coated on one face (29) with a stack of thin layers (14) with reflective properties in the infrared and/or in solar radiation, comprising at least one metallic functional layer (140), in particular based on silver or a metallic alloy containing silver and at least two anti-reflective coatings (120, 160), said anti-reflective coatings each comprising at least one dielectric layer (125, 165), said functional layer (140) being arranged between the two anti-reflective coatings (120, 160), ***characterized in that*** said underlying anti-reflective coating (120), located under said functional layer (140) towards said substrate (30), comprises:
- a zinc-based oxide underlayer, ZnO (129) which is located under and in contact with said functional layer (140), with a physical thickness of said zinc-based oxide underlayer, ZnO (129) which is between 0.3 and 4.4 nm, or even between 0.3 and 2.9 nm, or even between 0.5 and 2.4 nm;
- a dielectric underlayer of zinc and tin-based mixed oxide, SnᵢZnⱼO (128), with a physical thickness of said dielectric underlayer of zinc and tin-based mixed oxide, SnᵢZnⱼO (128) which is between 3.0 and 50.0 nm, or even between 4.0 and 40.0 nm, or even between 5.0 and 35.0 nm;
- a nitride dielectric underlayer based on silicon, Si₃N₄ (127) or based on silicon-zirconium, SiₓN_{y}Zr_{z} (127'), which is located under and in contact with said dielectric underlayer of tin and zinc-based oxide, SnᵢZnⱼO (128), with a physical thickness of said nitride dielectric underlayer based on silicon, S_{I3}N₄, (127) or based on silicon-zirconium, SiₓN_{y}Zr_{z} (127') which is between 5.0 and 50.0 nm, or even between 10.0 and 40.0 nm, or even between 15.0 and 25.0 nm;
***in that*** said overlying anti-reflective coating (160), located above said functional layer (140) opposite said substrate (30) comprises:
- an overlayer of zinc-based oxide, ZnO (161), with a physical thickness of said overlayer of zinc-based oxide, ZnO (161) which is between 2.0 and 10.0 nm, or even between 2.0 and 8.0 nm, or even between 2.5 and 5.4 nm; and
- a dielectric overlayer (165) which is located on said overlayer of zinc-based oxide, ZnO (161) and, preferably a dielectric overlayer of silicon-based nitride, Si₃N₄,
and ***in that an*** overblocking layer of titanium-based oxide, TiOₓ (150) is located over and in contact with said functional layer (140) and under said overlying anti-reflective coating (160), with a physical thickness of said blocking layer of titanium-based oxide, TiOₓ (150) which is between 0.3 and 5.0 nm, or even between 0.3 and 2.9 nm, or even between 0.5 and 2.4 nm.

2. The material according to claim 1, wherein said nitride dielectric underlayer is based on silicon-zirconium, SiₓN_{y}Zr_{z} (127') and has an atomic ratio of silicon to zirconium, x/z, of between 2.2 and 5.6, or even between 2.9 and 5.6, or even between 3.0 and 4.8, said silicon-zirconium based nitride dielectric underlayer, SiₓN_{y}Zr_{z} (127') preferably not comprising oxygen.

3. The material according to claim 1or 2, wherein said metallic functional layer (140), or each metallic functional layer, has a physical thickness which is between 8.0 and 22.0 nm, or even between 9.0 and 16.4 nm, or even between 9.5 and 12.4 nm.

4. The material according to claim 1 or 3, wherein said underlying anti-reflective coating (120), located under said metallic functional layer (140), and/or said overlying anti-reflective coating (160), located above said metallic functional layer (140) does not comprise any layer in the metal state.

5. The material according to any one of claims 1 to 4, wherein said nitride underlayer is based on silicon-zirconium, SiₓN_{y}Zr_{z} (127') and a primary dielectric underlayer of silicon-based nitride, Si₃N₄ (125) is located under and in contact with said silicon-zirconium based nitride underlayer, SiₓN_{y}Zr_{z} (127'), with a physical thickness of said primary dielectric underlayer of silicon-based nitride, Si₃N₄ (125) which is between 5.0 and 30.0 nm, or even between 5.0 and 20.0 nm, or even between 5.0 and 10.0 nm.

6. The material according to claim 1, wherein said nitride dielectric underlayer is based on silicon, Si₃N₄ (127) and does not comprise oxygen.

7. The material according to any one of claims 1 to 6, wherein said underlayer of zinc-based oxide, ZnO (129) and/or said overlayer of zinc-based oxide, ZnO (161) consists of zinc oxide ZnO doped with aluminum.

8. The material according to any one of claims 1 to 7, wherein said overlying anti-reflective coating (160), located above said functional layer (140), further comprises an intermediate dielectric overlayer (163) located between said overlayer of zinc-based oxide, ZnO (161) and said dielectric overlayer (165), this intermediate dielectric overlayer (163) being oxidized and preferably comprising: a titanium oxide TiOₓ or a mixed zinc and tin oxide.

9. A multiple glazing comprising a material according to any one of claims 1 to 8, and at least one other substrate (10), the substrates (10, 30) being held together by a frame structure (90), said glazing producing a separation between an exterior space (ES) and an interior space (IS), wherein at least one interlayer gas gap (15) is arranged between the two substrates.

10. A method for obtaining a material comprising a glass substrate (30) coated on one face (29) with a stack of thin layers (14) having reflective properties in the infrared and/or in solar radiation, comprising at least one metallic functional layer (140), in particular based on silver or on metal alloy containing silver and two anti-reflective coatings (120, 160), said anti-reflective coatings each comprising at least one dielectric layer (127, 165), said functional layer (140) being arranged between the two anti-reflective coatings (120, 160), said method comprising the following steps, in order:
- depositing, on one face (29) of said substrate (30), a stack of thin layers (14) having reflective properties in the infrared and/or in solar radiation comprising at least one metallic functional layer (140), in particular based on silver or on metal alloy containing silver and at least two anti-reflective coatings (120, 160), in order to form a material according to any one of claims 1 to 8, then
- treating said stack of thin layers (14) using a source producing radiation, and particularly infrared radiation.

11. The method according to claim 10, wherein said treatment is carried out in an oxygen-free atmosphere.

12. The method according to claim 10 or 11, wherein said underlayer of zinc-based oxide, ZnO (129) is deposited from a ceramic target comprising ZnO and in an oxygen-free atmosphere or an atmosphere comprising at most 10.0% oxygen.
